# EUROPEAN PATENT SPECIFICATION

(11) **EP 2 891 144 B1**
(45) Date of publication and mention of the grant of the patent: **14.08.2019**
(21) Application number: 12884226.7
(22) Date of filing: 05.09.2012
(51) Int. Cl.: G06F 3/0481, G06F 3/0484, G01V 9/00, G06F 17/50

(54) **MANIPULATING PARAMETERS**
PARAMETERMANIPULATION
MANIPULATION DE PARAMÈTRES

(43) Date of publication of application: 08.07.2015
(73) Proprietor: Landmark Graphics Corporation, Houston, TX 77042-3021 (US)
(72) Inventor: WHALLEY, Andrew, James, Calgary, Alberta T3L 2K7 (CA)
(74) Representative: Jennings, Michael John
(86) International application number: PCT/US2012/053724
(87) International publication number: WO 2014/039030

(56) References cited:
- WO-A2-2008/051310
- CN-A- 102 446 053
- US-A- 5 651 107
- US-A- 6 078 739
- US-A1- 2001 024 196
- US-A1- 2003 142 140
- US-A1- 2007 078 966
- US-A1- 2007 146 388
- US-A1- 2009 315 741
- US-B2- 8 261 209

## Description

### Technical field

The technical field of the invention is graphical user interfaces for parameter adjustment.

### Background

Configurations of systems, such as oil field drilling systems, can be planned during a planning stage. Often, a software application is used in the planning stage. The components that make up such systems can have a number of parameters that can be adjusted through the software application during the planning stage. It can be a challenge to provide a user with non-distracting tools to manipulate the adjustable parameters. US 2007/078966 A1 relates to the presentation of automation data and US 2001/024196 relates to an input device for injection molding machine. US 5 651 107 A relates to using transparency for a window such that data associated with underlying windows is visible to the user.

### Summary of the invention

The invention is defined by the appended independent claim. Preferred embodiments are set out in the dependent claims. Embodiments that do not fall within the scope of the claims do not describe part of the invention.

### Brief Description of the Drawings

Fig. 1 shows a computer system.
Figs. 2-4 show embodiments of technique for manipulating parameters through a graphical user interface.
Figs. 5-8 show embodiments of a heads up display.
Fig. 9 shows a flow chart.

### Detailed Description

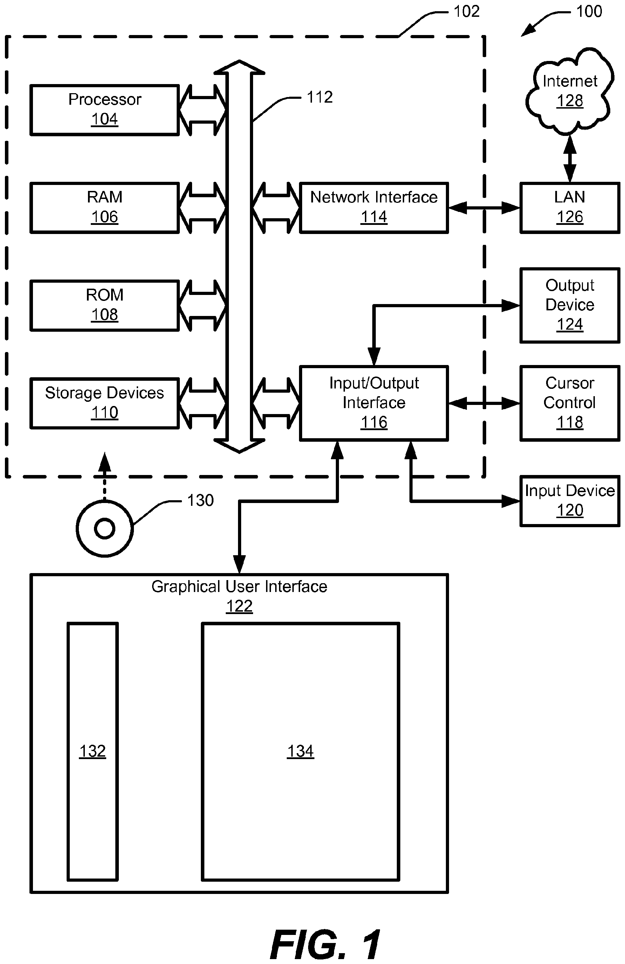

In one embodiment, a computer system environment 100, illustrated in Fig. 1, includes a computer housing 102 that contains a processor 104, such as a microprocessor; a random access memory 106 ("RAM"); a read only memory 108 ("ROM"); one or more storage devices 110, such as hard drives, optical drives, solid state drives, and other similar devices; interconnected by a bus 112. In one embodiment, one or more network interfaces 114 and one or more input/output ("I/O") interfaces 116 provide external interfaces for the processor 104 through the bus 112. In one embodiment, one or more cursor control devices 118, such as a mouse, a track pad, a graphics tablet, or the like, interface with the processor 104 through the I/O interface 116 and allow a user to manipulate a cursor. In one embodiment, one or more input devices 120, such as a keyboard, a keypad, or the like, interface with the processor 104 through the I/O interface 116 and allow the user to input characters, numbers, drawings, and the like. In one embodiment, one or more graphical user interfaces 122 interfaces with the processor 104 through the I/O interface 116 and allows the processor 104 to display text, graphics, and other information. In one embodiment, one or more output devices 124, such as printers, plotters, or the like, interface with the processor 104 through the I/O interface 116 and, for example, allow the production of hard copy output.

In one embodiment, the processor 104 interfaces with a local area network ("LAN") 126 through the network interface 114. In one embodiment, the processor 104 can communicate with other computers through the LAN 126. In one embodiment, the processor has access to the Internet 128 through the LAN 126.

In one embodiment, a computer program to implement the techniques described herein is stored on a non-transitory computer readable medium 130, such as a compact disk ("CD"), a digital versatile disc or digital video disc ("DVD"), an external solid state drive, or the like. In one embodiment, the medium 130 is loaded into a storage device 110, such as an optical drive, and the computer program is read from the medium and stored in the RAM 106, the ROM 108, or another storage device 110, such as a hard drive. In one embodiment, the computer program is compiled and linked, if necessary, and further prepared for execution. In one embodiment, and executable image of the computer program is stored in the RAM 106, the ROM 108, or another storage device 110, such as a hard drive. In one embodiment, the processor 104 executes the executable image, receive inputs from the cursor control 118 and input device 120, stores data in the RAM 106 and/or ROM 108, and produce outputs on the graphical user interface 122 and the output device 124.

In one embodiment, the computer program is used to design a work string to be used to drill a well to produce hydrocarbons. In one embodiment, the computer program produces an output on the graphical user interface 122. In one embodiment, the output includes a well schematic window 132 and a well data window 134. It will be understood that the output illustrated in Fig. 1 is merely illustrative and that the computer program can produce output in other formats and with additional data.

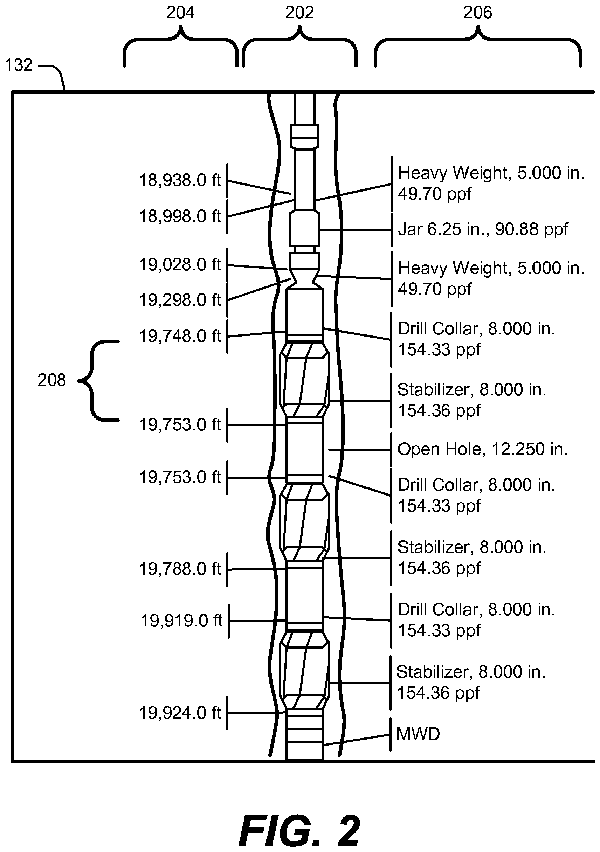

In one embodiment, illustrated in Fig. 2, the well schematic window 132 includes a graphical depiction 202 of a work string being planned, a depth area 204, and a component description area 206. In one embodiment, the graphical depiction 202 includes graphical depictions of various components in the work string. In one embodiment, the depth area 204 includes data about the depth in the well of the components in the work string illustrated in the graphical depiction 202. In one embodiment, the component description area 206 includes descriptive information about the components shown in the graphical depiction 202. For example, component 208 is illustrated in the graphical depiction area 202, described in the depth area 204 as extending from 19,748 feet to 19,753 feet of depth in the work string, and in the component description area as an 8 inch stabilizer that weighs 154.36 pounds per foot ("PPF"). Other components in the work string are similarly described.

In one embodiment, in a conventional system, the values associated with a component are changed, for example, by selecting (e.g. clicking on) a component or a value associated with the component and making the desired change on windows that appear to facilitate the change.

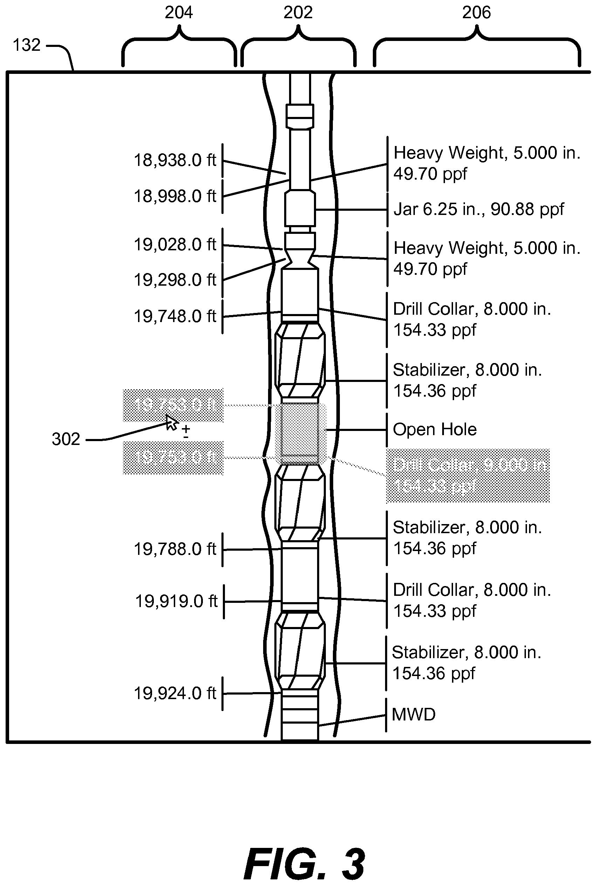

In one embodiment, illustrated in Fig. 3, a component to be adjusted is selected by using the cursor control 118 to move a cursor 302 over a component or a label associated with the component, such as the information associated with the component shown in the depth area 202 or the component description area 206. In one embodiment, the cursor 302 is a pre-selection cursor that includes a "±" adjacent to the traditional cursor arrow. In one embodiment, when the processor 104 detects selection of a component it causes the display of the component and its associated labels to be highlighted on the graphical user interface 122. In one embodiment, the highlighting is accomplished with shading as shown in Fig. 3. In one embodiment, the highlighting is accomplished by changing the color of the component and its associated labels. In one embodiment, the highlighting is accomplished by causing the components and its associated labels to flash. In one embodiment, the highlighting is accomplished by a combination of these techniques.

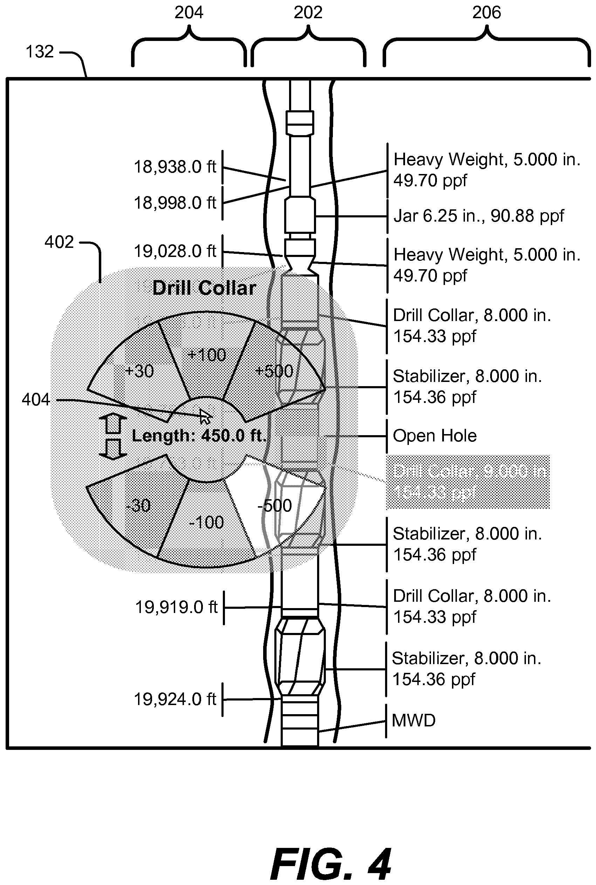

In one embodiment, illustrated in Fig. 4, if the processor 104 detects a selection (such as a mouse click or a tap on a graphics tablet or the like) of one of the highlighted areas (see Fig. 3), the processor 104 causes a heads up display ("HUD") 402 to appear as a semi-transparent, or translucent, panel over the schematic image and associates the newly-displayed HUD with the component associated with the selected highlighted area. In one embodiment, the processor 104 changes the cursor from the pre-selection cursor 302 with the "±" shown in Fig. 3 to a post-selection cursor 404 without the "±" shown in Fig. 4, indicating that a selection has been made. In one embodiment, the processor 104 causes labels beneath the HUD to be un-highlighted to prevent them from interfering with the HUD image. For example, in Fig. 4, the "19,753.0 ft" label, which is associated with the drill collar at that depth, has been selected, and the processor has displayed a HUD 402 for that drill collar. The labels in the depth area 202 (depths 19298, 19784, 19753 (both instances), and 19788) are un-highlighted by changing their colors along with the colors of their reference lines to a lighter color or by greying them.

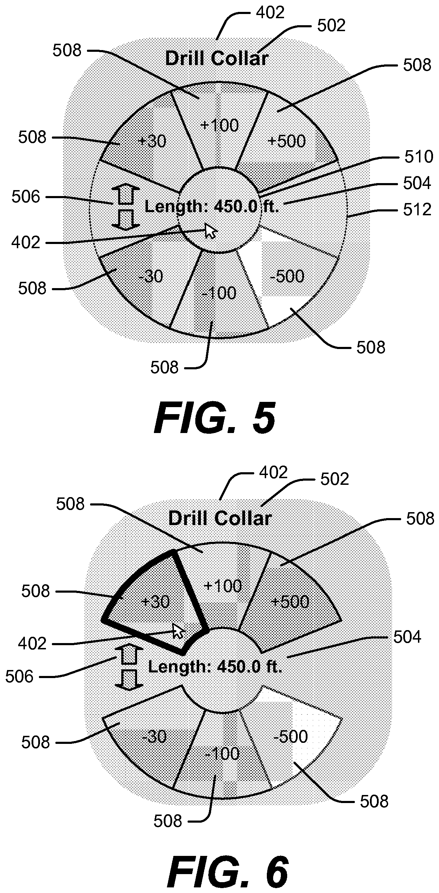

In one embodiment, illustrated in Fig. 5, the HUD consists of an identifier 502 (i.e., "Drill Collar") that identifies the type of component being manipulated. In one embodiment, the identifier includes information about the depth of the component (i.e., "Drill Collar - 19,753 ft") and/or other information about the component.

In one embodiment, the HUD includes a parameter identifier 504 and a current value of the parameter (i.e. Length: 450.0 ft) being manipulated. In one embodiment, the current value of the parameter identified by the parameter identifier 504 is stored, along with current values for other parameters associated with the selected component and other unselected components in the work string, in the RAM 106, the ROM 108, or in one of the storage devices 110.

In one embodiment, the HUD includes a parameter select control 506 by which the parameter associated with the component can be manipulated. In one embodiment, shown in Fig. 5, the parameter select control 506 includes an up button and a down button. In one embodiment, the up button cycles through the parameters in one direction (e.g., "top" to "bottom") and the down button cycles through the parameters in another direction (e.g., "bottom" to "top"). In one embodiment, the parameter select control 506 is a pull-down menu that, when selected, lists all of the parameters available for manipulation. In one embodiment, the parameter select control 506 is a single button that facilitates cycling through the parameters.

In one embodiment, if the processor 104 determines that a new parameter has been selected using the parameter select control 506, the processor 104 changes the parameter identifier 504 to reflect the newly selected parameter.

In one embodiment, the HUD includes parameter-adjustment controls or, as illustrated in Fig. 5, panel-adjustment segments 508, each labeled with an adjustment amount by which the parameter can be adjusted. In the example shown in Fig. 5, the parameter-adjustment segments 508 are labeled +30, +100, +500, -30, -100, and -500.

In one embodiment, the parameter-adjustment segments 508 can perform other arithmetic operations on the current value of the parameter. For example, in one embodiment, the parameter-adjustment segments 508 are multipliers, labeled for example "X2," "X3," "X4," etc. As another example, the parameter-adjustment segments are divisors, labeled for example "/2," "/3," "/4," etc.

In the example shown in Fig. 5, the panel-adjustment segments 508 are arranged in a ring. In the example shown in Fig. 5, the panel-adjustment segments 508 are arranged in a specific ring such that their inner perimeters all fall on the same circle 510 and their outer perimeters all fall on the same circle 512. In one embodiment, neither circle 510 nor circle 512 actually appears with the HUD 402.

In one embodiment, parameter-adjustment segments 508 that do not have valid label values are greyed out and disabled. That is, if applying the value of a parameter-adjustment segment 508 to the parameter would make the parameter invalid then the parameter-adjustment segment 508 is greyed out. For example, if the current length of a component being manipulated is 15ft then the "-30" and "-100" parameter-adjustment segments would be greyed out since applying that value would make the length less than 0, which is invalid. The same is true for the positive numbers if there is an upper limit on the length. For example, a parameter-adjustment segment 508 would be invalid if selecting it would make the component longer than the total length of the hole.

In the example shown in Fig. 5, the "-500" parameter-adjustment segment 508 has been greyed out. The "-500" parameter-adjustment segment 508 is disabled so that selecting it would produce no result.

In one embodiment, illustrated in Fig. 6, if the processor 104 detects that the cursor 402 has been moved over a parameter-adjustment segment 508, the processor 104 causes that parameter-adjustment segment 508 to be highlighted. In one embodiment, the processor 104 highlights the selected parameter-adjustment segment 508 by changing its color, changing its depth of shading, changing the color or the width of a line surrounding the selected parameter-adjustment segment 508, or another similar technique. In the example shown in Fig. 6, the processor 104 has increased the width of the line surrounding the selected parameter-adjustment segment 508 (the "+30" parameter-adjustment segment 508).

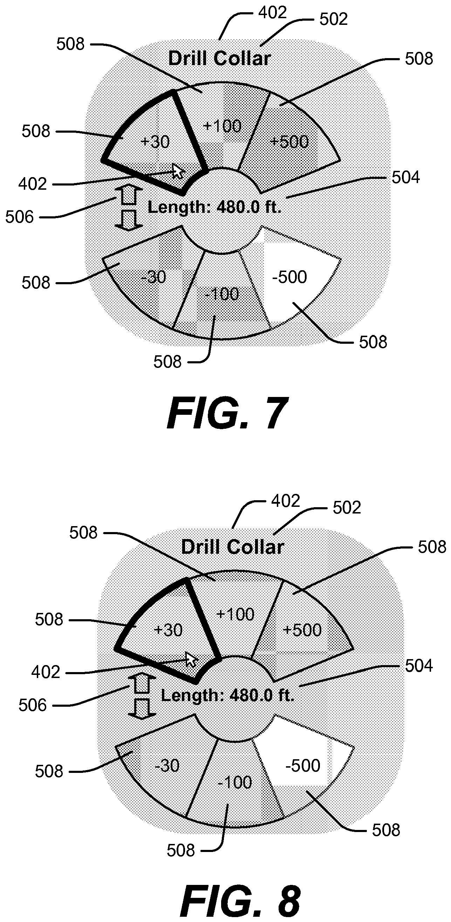

In one embodiment, illustrated in Fig. 7, if the processor 104 detects that the highlighted parameter-adjustment segment 508 has been selected by, for example, clicking on it, the processor 104 causes the stored current value of that parameter to be adjusted by the amount associated with the highlighted parameter-adjustment segment 508 and causes the display of the current value of the parameter with the parameter identifier 504 to reflect the new current value. In the example shown in Fig. 7, the current associated with the parameter identifier 504 has changed from "450.0" to "480.0" after the "+30" parameter-adjustment segment 508 has been selected.

In one embodiment, illustrated in Fig. 8, if the processor 104 detects N selections (e.g. clicks) on a highlighted parameter-adjustment segment 508, where N > 1, each of the separations separated by a period of time less than or equal to a multiple-selection threshold period of time, the processor 104 will cause the current stored value that parameter to be adjusted by N times the amount associated with the highlighted parameter-adjustment segment 508 and will cause the display of the current value of the parameter with the parameter identifier 504 to reflect the new current value without displaying the intermediate values. In one embodiment, the multiple-selection threshold period of time is between 0.1 seconds and 1 second. In one embodiment, the multiple-selection threshold period of time is between 0.05 seconds and 2 seconds. In one embodiment, the multiple-selection threshold period of time is between 0.25 seconds and .5 second. In the example shown in Fig. 7, the current value associated with the parameter identifier 504 has changed from "450.0" to "540.0" , without displaying the intermediate values (i.e., "480.0" and "510.0"), after the "+30" parameter-adjustment segment 508 has been selected 3 times with a delay of between 0.25 and 0.5 seconds between each selection.

In one embodiment, if the processor 504 determines that the cursor 402 has been moved away from the HUD 402, the processor 504 will cause the HUD 402 to disappear, causing the well schematic window 132 to appear similar to that shown in Fig. 2, except for any adjustments that were made.

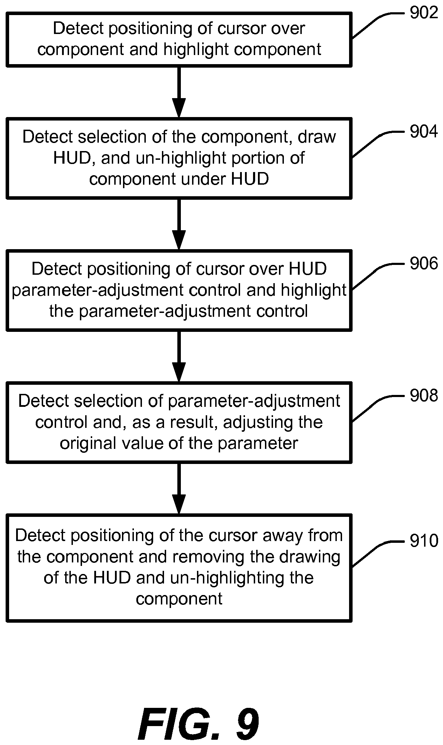

In operation, one embodiment of which is illustrated in Fig. 9, the processor 104 detects positioning of a cursor, such as cursor 302, over a component in a system schematic 132 displayed on a graphical user interface 122 and, as a result, highlights the component (block 902), as illustrated in Fig. 3. In one embodiment, as discussed with respect to Fig. 4, the processor 104 detects selection of the component and, as a result, draws a translucent heads up display ("HUD") 402 over the highlighted component (block 904). As previously discussed with respect to Fig. 5, in one embodiment, the HUD includes a display of a parameter 504 associated with the component, a display of an original value for the parameter, and a plurality of parameter-adjustment controls 508, wherein each parameter-adjustment control 508 has associated with it an amount to adjust the value of the parameter. As previously discussed with respect to Fig. 4, in one embodiment, the processor 104 un-highlights a portion of the highlighted component, wherein the un-highlighted portion is under the HUD 402. As previously discussed with respect to Fig. 6, in one embodiment, the processor 104 detects positioning of the cursor over a HUD parameter-adjustment control 508 and, as a result, highlights the HUD parameter-adjustment control (block 906). As previously discussed with respect to Figs. 7 and 8, in one embodiment, the processor 104 detects selection of the HUD parameter-adjustment control and, as a result, replaces the display of the original value of the parameter for the component with a display of an adjusted value computed by adjusting the original value by the amount associated with the selected HUD adjustment button (block 908). In one embodiment, the processor detects positioning of the cursor away from the component and, as a result, removes the drawing of the HUD and un-highlights the component (block 910)

The word "coupled" herein means a direct connection or an indirect connection.

The verb "draw" herein means to represent on the graphical user interface 122 and is not to be limited to any particular graphical technique or software.

The text above describes one or more specific embodiments of a broader invention. The invention also is carried out in a variety of alternate embodiments and thus is not limited to those described here. The foregoing description of an embodiment of the invention has been presented for the purposes of illustration and description. It is not intended to be exhaustive or to limit the invention to the precise form disclosed. Many modifications and variations are possible in light of the above teaching. It is intended that the scope of the invention be limited not by this detailed description, but rather by the claims appended hereto.

## Claims

1. A method comprising:
detecting positioning of a cursor (302) over a component in a system schematic (132) displayed on a graphical user interface (122) and, as a result, highlighting the component;
detecting selection of the component and, as a result, drawing a translucent heads up display, "HUD", (402) over the highlighted component; and
detecting positioning of the cursor away from the HUD and, as a result, removing the drawing of the HUD and un-highlighting the component,
wherein the HUD comprises:
a display of a parameter (504) associated with the component,
a display of an original value for the parameter, and
a plurality of parameter-adjustment controls (508), wherein each parameter-adjustment control has associated with it an amount to adjust the value of the parameter;
and the method further comprises:
un-highlighting a portion of the highlighted component, wherein the un-highlighted portion is under the HUD;
detecting positioning of the cursor over a HUD parameter-adjustment control and, as a result, highlighting the HUD parameter-adjustment control; and
detecting selection of the HUD parameter-adjustment control and, as a result, replacing the display of the original value of the parameter for the component with a display of an adjusted value computed by adjusting the original value by the amount associated with the selected HUD parameter-adjustment control.

2. The method of claim 1 wherein the adjusted value is computed from the original value by an arithmetic operation selected from the group consisting of addition, subtraction, multiplication, and division.

3. The method of claim 1 wherein:
the system schematic includes a label adjacent to and associated with the component; and
highlighting the component includes highlighting the label.

4. The method of claim 1 wherein drawing the HUD comprises:
determining that one of the amounts associated with one of the plurality of parameter-adjustment controls is invalid; and
drawing the one parameter-adjustment control as greyed out.

5. The method of claim 1 wherein:
detecting selection of the component comprises detecting a click on the component; and
detecting selection of the HUD parameter-adjustment control comprises detecting a click on the HUD parameter-adjustment control.

6. The method of claim 1 wherein:
each of the plurality of parameter-adjustment controls includes a display of its associated adjustment amount and optionally the amounts associated with each parameter-adjustment control have a magnitude and a sign.

7. The method of claim 1 further comprising:
detecting selection of a parameter-selection control on the HUD and, as a result, replacing the display on the HUD of the parameter and the parameter-adjustment controls for the parameter with a second parameter and parameter-adjustment controls for the second parameter.

8. The method of claim 1 wherein detecting selection of the component further results in changing the cursor from a pre-selection cursor (302) to a post-selection cursor (402).

## Patentansprüche

1. Verfahren, umfassend:
Erfassen einer Positionierung eines Cursors (302) über einer Komponente in einem Systemschema (132), das auf einer graphischen Benutzerschnittstelle (122) angezeigt wird, und Hervorheben der Komponente als Folge davon;
Erfassen einer Auswahl der Komponente und Zeichnen einer durchsichtigen exponierten Anzeige (heads up-display - HUD) (402) über der hervorgehobenen Komponente als Folge davon; und
Erfassen einer Positionierung des Cursors von der HUD weg und Entfernen der Zeichnung der HUD und Aufheben der Hervorhebung der Komponente als Folge davon,
wobei die HUD Folgendes umfasst:
eine Anzeige eines Parameters (504), welcher der Komponente zugeordnet ist,
eine Anzeige eines ursprünglichen Werts für den Parameter und eine Vielzahl von Parametereinstellungssteuerungen (508), wobei jede Parametereinstellungssteuerung einen dieser zugeordneten Betrag zum Einstellen des Werts des Parameters aufweist;
und das Verfahren ferner Folgendes umfasst:
Aufheben der Hervorhebung eines Abschnitts der hervorgehobenen Komponente, wobei sich der Abschnitt, für den die Hervorhebung aufgehoben wurde, unter der HUD befindet;
Erfassen einer Positionierung des Cursors über einer HUD-Parametereinstellungssteuerung und Hervorheben der HUD-Parametereinstellungssteuerung als Folge davon; und
Erfassen einer Auswahl der HUD-Parametereinstellungssteuerung und Ersetzen der Anzeige des ursprünglichen Werts des Parameters für die Komponente durch eine Anzeige eines eingestellten Werts, der durch Einstellen des ursprünglichen Werts durch den Betrag, welcher der ausgewählten HUD-Parametereinstellungssteuerung zugeordnet ist, als Folge davon.

2. Verfahren nach Anspruch 1, wobei der eingestellte Wert durch einen arithmetischen Vorgang, der aus der Gruppe bestehend aus Addition, Subtraktion, Multiplikation und Division ausgewählt ist, aus dem ursprünglichen Wert berechnet wird.

3. Verfahren nach Anspruch 1, wobei:
das Systemschema eine Markierung benachbart zu der Komponente beinhaltet und die dieser zugeordnet ist; und
das Hervorheben der Komponente Hervorheben der Markierung beinhaltet.

4. Verfahren nach Anspruch 1, wobei das Zeichnen der HUD Folgendes umfasst:
Bestimmen, dass einer der Beträge, der einer der Vielzahl von Parametereinstellungssteuerungen zugeordnet ist, ungültig ist; und
Zeichnen der einen Parametereinstellungssteuerung als ausgegraut.

5. Verfahren nach Anspruch 1, wobei:
das Erfassen einer Auswahl der Komponente Erfassen eines Klicks auf die Komponente umfasst; und
das Erfassen einer Auswahl der HUD-Parametereinstellungssteuerung Erfassen eines Klicks auf die HUD-Parametereinstellungssteuerung umfasst.

6. Verfahren nach Anspruch 1, wobei:
jede der Vielzahl von Parametereinstellungssteuerungen eine Anzeige von deren zugeordnetem Einstellungsbetrag beinhaltet und gegebenenfalls die Beträge, die jeder Parametereinstellungssteuerung zugeordnet sind, eine Größe und ein Vorzeichen aufweisen.

7. Verfahren nach Anspruch 1, ferner umfassend:
Erfassen einer Auswahl einer Parametereinstellungssteuerung auf der HUD und Ersetzen der Anzeige des Parameters auf der HUD und der Parametereinstellungssteuerungen für den Parameter durch einen zweiten Parameter und Parametereinstellungssteuerungen für den zweiten Parameter als Folge davon.

8. Verfahren nach Anspruch 1, wobei das Erfassen einer Auswahl der Komponente ferner ein Ändern des Cursors von einem Vorauswahlkursor (302) in einen Nachauswahlcursor (402) zur Folge hat.

## Revendications

1. Procédé comprenant :
la détection du positionnement d'un curseur (302) sur un composant dans un schéma de système (132) affiché sur une interface utilisateur graphique (122) et, en conséquence, la mise en évidence du composant ;
la détection de la sélection du composant et, en conséquence, le dessin d'un affichage à tête haute translucide, « HUD », (402) sur le composant mis en évidence ; et
la détection du positionnement du curseur à distance du HUD et, par conséquent, le retrait du dessin du HUD et l'annulation de la mise en évidence du composant,
dans lequel le HUD comprend :
un affichage d'un paramètre (504) associé au composant,
un affichage d'une valeur d'origine pour le paramètre, et
une pluralité de commandes de réglage de paramètres (508), dans lequel chaque commande de réglage de paramètres est associée à une quantité permettant de régler la valeur du paramètre ;
et le procédé comprend en outre :
l'annulation de la mise en évidence d'une partie du composant mis en évidence, dans lequel la partie non mise en évidence se trouve sous le HUD ;
la détection du positionnement du curseur sur une commande de réglage de paramètres de HUD et, en conséquence, la mise en évidence de la commande de réglage de paramètres de HUD ; et
la détection de la sélection de la commande de réglage de paramètres de HUD et, en conséquence, le remplacement de l'affichage de la valeur d'origine du paramètre pour le composant par un affichage d'une valeur réglée calculée par le réglage de la valeur d'origine par la quantité associée à la commande de réglage de paramètres de HUD sélectionnée.

2. Procédé selon la revendication 1, dans lequel la valeur réglée est calculée à partir de la valeur d'origine par une opération arithmétique choisie dans le groupe constitué de l'addition, de la soustraction, de la multiplication et de la division.

3. Procédé selon la revendication 1, dans lequel :
le schéma de système inclut une étiquette adjacente au composant et associée à celui-ci ; et
la mise en évidence du composant inclut la mise en évidence de l'étiquette.

4. Procédé selon la revendication 1, dans lequel le dessin du HUD comprend :
le fait de déterminer que l'une des quantités associées à l'une de la pluralité de commandes de réglage de paramètres est invalide ; et
le dessin de la commande de réglage de paramètres en grisé.

5. Procédé selon la revendication 1, dans lequel :
la détection de la sélection du composant comprend la détection d'un clic sur le composant ; et
la détection de la sélection de la commande de réglage de paramètres de HUD comprend la détection d'un clic sur la commande de réglage de paramètres de HUD.

6. Procédé selon la revendication 1, dans lequel :
chacune de la pluralité de commandes de réglage de paramètres inclut un affichage de sa quantité de réglage associée et, éventuellement, les quantités associées à chaque commande de réglage de paramètres ont une grandeur et un signe.

7. Procédé selon la revendication 1, comprenant en outre :
la détection de la sélection d'une commande de sélection de paramètres sur le HUD et, en conséquence, le remplacement de l'affichage sur le HUD du paramètre et des commandes de réglage de paramètres pour le paramètre par un second paramètre et des commandes de réglage de paramètres pour le second paramètre.

8. Procédé selon la revendication 1, dans lequel la détection de la sélection du composant entraîne en outre le changement du curseur d'un curseur de présélection (302) à un curseur de post-sélection (402).
